# EUROPEAN PATENT APPLICATION

(11) **EP 4 768 326 A1**
(43) Date of publication of application: **01.07.2026**
(21) Application number: 24941611.6
(22) Date of filing: 28.12.2024
(51) Int. Cl.: B60N 2/00, A47C 7/00

(54) **SEAT AND VEHICLE**

(30) Priority: 27.05.2024 CN 202410672173
(71) Applicant: Huawei Technologies Co., Ltd., Shenzhen, Guangdong 518129 (CN)
(72) Inventor: YAO, Haicheng, Shenzhen, Guangdong 518129 (CN); ZHANG, Jingbo, Shenzhen, Guangdong 518129 (CN); LU, Xiao, Shenzhen, Guangdong 518129 (CN)
(74) Representative: Epping - Hermann - Fischer
(86) International application number: PCT/CN2024/143554
(87) International publication number: WO 2025/246346

(57) **Abstract**

A seat (100) and a vehicle are provided. The seat (100) includes a seat frame (101); a comfort layer (102), disposed outside the seat frame (101), where the comfort layer (102) is provided with a through hole (106); a trim layer (103), disposed outside the comfort layer (102); and a sensor (104), located between the comfort layer (102) and the trim layer (103), where the sensor (104) is electrically connected to a control apparatus (180) through a wire (105) that passes through the through hole (106). A routing structure in the seat (100) is optimized, to improve ride comfort on the seat (100).

## Description

This application claims priority to Chinese Patent Application No. 202410672173.1, filed with the China National Intellectual Property Administration on May 27, 2024 and entitled "SEAT AND VEHICLE", which is incorporated herein by reference in its entirety.

### TECHNICAL FIELD

This application relates to the field of adaptive adjustment technologies, and in particular, to a seat and a vehicle.

### BACKGROUND

A seat adaptive adjustment system in a cockpit of a vehicle usually includes sensors and a control apparatus. The sensors are mounted on the seat, and are configured to sense information about a passenger. The control apparatus is configured to automatically adjust a seat position based on the information, so that parts of the seat can fully fit corresponding parts of a human body, and personalized comfortable experience can be provided for the passenger. The sensors in the seat are usually electrically connected to the control apparatus through wires. Consequently, routing and layout of the wires in the seat are difficult due to a large quantity of sensors. A routing structure in the current technology causes a foreign-object sensation on a surface of the seat, and even affects ride comfort on the seat.

### SUMMARY

Embodiments of this application provide a seat and a vehicle. A routing structure in the seat is optimized, to improve ride comfort on the seat.

According to a first aspect, a seat is provided, and includes a seat frame; a comfort layer, disposed outside the seat frame, where the comfort layer is provided with a through hole; a trim layer, disposed outside the comfort layer; and a sensor, located between the comfort layer and the trim layer, where the sensor is electrically connected to a control apparatus through a wire that passes through the through hole.

The comfort layer of the seat provided in embodiments of this application is provided with the through hole, and the wire can pass through the through hole and extend into the seat, so that the sensor is electrically connected to the control apparatus. Because the wire is guided and accommodated in the through hole, instead of being randomly clamped between the trim layer and the comfort layer, a foreign-object sensation on a surface of the trim layer caused by the wire can be effectively alleviated, and passenger ride comfort can be improved. In addition, an edge of the comfort layer is usually subject to large extrusion pressure from the trim layer, and is a sensitive region that greatly affects ride comfort. In this application, the through hole is disposed, so that the wire does not need to bypass the edge of the comfort layer and extend into the seat. Therefore, the wire does not cause a foreign-object sensation at the edge of the comfort layer, and passenger ride comfort can be improved. In some embodiments of this application, a routing structure of the wire connected to the sensor is optimized, to improve ride comfort on the seat, and prevent disposing of the sensor from greatly affecting ride comfort on the seat.

In some examples, the seat frame may be a metal frame or a plastic frame. This is not limited thereto.

In some examples, the seat frame may be a cushion frame, a backrest frame, a headrest frame, or a leg rest frame. Alternatively, the seat frame includes at least one of a cushion frame, a backrest frame, a headrest frame, and a leg rest frame.

In some examples, the comfort layer may include a foam layer. This is not limited thereto. For example, the comfort layer may include one or more of a polypropylene foam layer, a polyurethane foam layer, a sponge layer, a porous elastic material layer, a foam layer, a rubber layer, a plastic layer, and a cotton latex layer.

In some examples, the trim layer may include a leather layer and/or a fabric layer. This is not limited thereto.

In some examples, the wire may be a metal wire, or may be any other line structure that can be electrically connected, for example, a conductive fiber. The wire may include one wire, or may include a plurality of wires that are electrically insulated from each other (that is, the wire may be a wire harness). This is not limited in this application.

In some examples, the through hole penetrates an inner side surface and an outer side surface of the comfort layer. For example, the through hole vertically penetrates the comfort layer, and a cross-sectional (hole opening) shape of the through hole may be any regular or irregular shape like a circle, an ellipse, a triangle, a quadrilateral (a rectangle, a rhombus, or a trapezoid), or a pentagon. The through hole may include one through hole, or may include a plurality of through holes. This is not limited in this application. For example, the wire may include a plurality of wires, and the plurality of wires may all pass through a unique through hole, or may be distributed in a plurality of through holes. In some examples, the control apparatus is located inside the seat, for example, may be located on an inner side of the seat frame. In addition, the seat frame is usually of a hollow structure, and the control apparatus may also be disposed inside the seat frame. The control apparatus may alternatively be disposed outside the seat. A specific location of the control apparatus is not particularly limited in this application.

In a possible implementation, a distance between the through hole and the edge of the comfort layer ranges from 10 millimeters to 20 millimeters. For example, the distance may be 11 mm, 12 mm, 15 mm, 16 mm, or 18 mm. For example, the distance between the through hole and the edge of the comfort layer may be a minimum distance between the through hole and the edge of the comfort layer, for example, a minimum distance between an opening edge of the through hole and the edge of the comfort layer.

If the distance between the through hole and the edge of the comfort layer is small, the wire (for example, the wire harness) in the through hole may be severely squeezed by the trim layer at the edge of the comfort layer, which affects ride comfort and signal transmission performance of the sensor after wrapping. If the distance between the through hole and the edge of the comfort layer is large, the through hole and the wire in the through hole are too close to a middle region of the seat, which also affects ride comfort. In some embodiments of this application, the distance between the through hole and the edge of the comfort layer is configured, to ensure signal transmission effect of the sensor and ride comfort on the seat.

In some examples, at least one edge of the comfort layer is provided with a listing trench. In this case, a trench edge that is adjacent to the through hole and that is of the listing trench may be considered as an edge of the comfort layer. Therefore, the "distance between the through hole and the edge of the comfort layer" may also be understood as a distance between the through hole and the listing trench, for example, may be a minimum distance between the opening edge of the through hole and the trench edge of the listing trench.

In a possible implementation, the sensor is of a sheet structure and disposed on the comfort layer, and projection of the sensor on the comfort layer is located on an inner side of the edge of the comfort layer.

Based on the foregoing setting, the sensor can cover the surface of the comfort layer to ensure flatness of the seat surface. In addition, the projection of the sensor is located on the inner side of the edge of the comfort layer, that is, any edge of the sensor does not exceed the edge of the comfort layer. Therefore, this can ensure ride comfort at the edge of the comfort layer, and prevent the sensor from being severely squeezed by the trim layer at the edge of the comfort layer, to ensure that the sensor can stably operate for long time.

In some examples, the sensor may be a capacitive pressure sensing pad with a flexible structure.

In some examples, both the sensor and the comfort layer are of a rectangular structure, and an edge of the sensor is parallel to an edge of one corresponding side of the comfort layer.

In a possible implementation, a distance between an edge of the sensor and an edge of one corresponding side of the comfort layer ranges from 10 millimeters to 20 millimeters. For example, the distance may be 11 mm, 12 mm, 15 mm, 16 mm, or 18 mm. For example, the distance between the sensor and the edge of the comfort layer may be a minimum distance between the sensor and the edge of the comfort layer, for example, a minimum distance between the edge of the sensor and the edge of the comfort layer.

If the distance between the sensor and the edge of the comfort layer is small, the sensor may be severely squeezed by the trim layer at the edge of the comfort layer, which affects ride comfort and monitoring performance of the sensor after wrapping. If the distance between the sensor and the edge of the comfort layer is large, an area of the sensor is small, that is, the sensor covers a small area of the comfort layer, which also affects monitoring performance of the sensor. In some embodiments of this application, the distance between the through hole and the edge of the comfort layer is configured, to ensure monitoring performance of the sensor and ride comfort on the seat.

In some examples, at least one edge of the comfort layer is provided with a listing trench. In this case, a trench edge that is adjacent to the sensor and that is of the listing trench may be considered as an edge of the comfort layer. Therefore, the "distance between the sensor and the edge of the comfort layer" may also be understood as a distance between the sensor and the listing trench, for example, may be a minimum distance between the edge of the sensor and the trench edge of the listing trench.

In a possible implementation, the sensor covers the through hole.

In the setting in which the sensor covers the through hole, impact of the through hole and the wire in the through hole on ride comfort can be reduced through covering the through hole by the sensor. In addition, because the sensor does not need to avoid the through hole, the area of the sensor can be set to be larger. This can improve monitoring performance of the sensor.

In a possible implementation, at least one edge of the comfort layer is provided with a listing trench. A listing member like a listing wire, a listing strip, or the like may be disposed in the listing trench. Two ends of the listing member are respectively connected to the comfort layer and the trim layer, so that the trim layer can be reliably attached to the surface of the comfort layer.

In a possible implementation, the sensor includes a capacitive pressure sensing pad, the capacitive pressure sensing pad includes a first electrode layer, a dielectric layer, and a second electrode layer that are stacked, the first electrode layer includes a non-electrode region and an electrode region, and the electrode region is electrically connected to the wire.

In some examples, air permeability of the non-electrode region is better than that of the electrode region.

In other words, air permeability of the non-electrode region may be different from that of the electrode region, and the non-electrode region has better air permeability, to ensure that the pressure sensing pad has good overall air permeability, and improve ride comfort on the seat. However, air permeability of the electrode region is poor, and more attention may be paid to pressure sensing performance of a monitoring unit in the electrode region, for example, density of conductive fibers may be increased in the electrode region. This can ensure that the monitoring unit has stable and reliable sensing performance. In other words, in some embodiments of this application, based on the foregoing setting, both the structural stability (pressure sensing requirements) of the monitoring unit and overall air permeability of the fabric can be ensured, to prevent disposing of the pressure sensing pad from compromising ride comfort on the seat.

In a possible implementation, the electrode region at the first electrode layer includes textile conductive fibers, the wire is a metal wire, a connector is disposed on the first electrode layer, and the electrode region is electrically connected to the wire via the connector.

The electrode region in embodiments of this application may be formed by knitting conductive fibers. In other words, the first electrode layer may be manufactured by using a textile (for example, knitting or weaving) process. The process is simple and easy to implement, and costs are low. However, the conductive fibers cannot be welded to the control apparatus. Therefore, the connector is disposed on the first electrode layer in embodiments of this application, one end of the connector is electrically connected to the electrode region, and the other end is electrically connected (for example, welded) to one end of the metal wire, to electrically connect the other end of the wire to the control apparatus through welding. Based on the foregoing setting, the sensor can be reliably connected to the control apparatus.

In some examples, the connector is disposed on the first electrode layer, and specifically, the connector may be directly disposed on the electrode region, to facilitate electrical connection between the electrode region and the connector. In some examples, the electrode region is electrically connected to the connector through the conductive fibers. Based on the foregoing setting, the connector can be more flexibly mounted, so that electrical connection between the electrode region and the connector is easy to implement, and the connection can be more reliable.

In some examples, a plurality of electrode regions are connected to a same side of the first electrode layer through the conductive fibers, and are all electrically connected to one end of the connector. The other end of the connector is correspondingly electrically connected to the plurality of wires, to implement reliable connection between the plurality of electrode regions and the control apparatus. Based on the foregoing setting, it is further convenient to sort and lead out the wires. After being bundled (that is, combined into the wire harness) at the connector, the plurality of wires may be directly led out through the through hole.

In some examples, the connector may be a metal conductive button, and a diameter of the metal conductive button may be less than 5 mm, for example, may be 2 mm, 3 mm, or 4 mm, to reduce impact on ride comfort. In this case, the metal conductive button is snap-fitted into an opening formed by the conductive fibers, so that the connector can be electrically connected to the electrode region. The connection manner is simple, and the electrical connection is more reliable.

In a possible implementation, the sensor includes at least one of a pressure sensor, a temperature sensor, a heart rate sensor, a blood pressure sensor, a humidity sensor, a distance sensor, a displacement sensor, or an acceleration sensor. In a possible implementation, the sensor includes a cushion pressure sensor located on a cushion, a backrest pressure sensor located on a backrest, a headrest pressure sensor located on a headrest, and a leg rest pressure sensor located on a leg rest. In some embodiments of this application, the plurality of pressure sensors are disposed at different positions of the seat, to implement more intelligent and efficient adaptive adjustment of the seat.

In a possible implementation, the cushion pressure sensor, the backrest pressure sensor, the headrest pressure sensor, and the leg rest pressure sensor each include a plurality of monitoring units arranged in an array, and disposing density of the monitoring units of the headrest pressure sensor is greater than disposing density of the monitoring units of the cushion pressure sensor, the backrest pressure sensor, and the leg rest pressure sensor.

In other words, compared with other regions, the headrest has a maximum quantity of monitoring units disposed per unit area, to meet a high-precision pressure monitoring requirement for the head of the passenger. In addition, density of monitoring units disposed in the other regions may be small, to reduce material costs of the sensor. In some embodiments of this application, the disposing density of the monitoring units is configured, to reduce material costs of the sensor while meeting the monitoring requirement.

According to a second aspect, a vehicle is provided, and includes one or more (for example, two, three, or four) seats provided in any one of the possible implementations of the first aspect.

Because the vehicle uses the seat provided in the first aspect, the vehicle also has technical effect corresponding to the seat. Details are not described herein again.

In some examples, the vehicle may be any vehicle like a car, a train, an electric multiple unit, a high-speed railway, or an airplane. This is not limited thereto. The car may be, for example, a sedan, a truck, a bus, a pickup truck, a multi-purpose vehicle (multi-purpose vehicle, MPV), or a sport utility vehicle (sport utility vehicle, SUV). In addition, the vehicle may be an internal combustion engine vehicle, or may be a new energy vehicle like an electric vehicle, a hybrid electric vehicle, or an extended-range electric vehicle. The car may be a vehicle with a partial or full self-driving function. A type, a form, or the like of the vehicle is not limited in this application.

### BRIEF DESCRIPTION OF DRAWINGS

FIG. 1 is a diagram of a structure of a seat according to an embodiment of this application;
FIG. 2 is a diagram of an internal structure of a seat according to an embodiment of this application;
FIG. 3 is a mounting diagram of an example of a pressure sensor according to an embodiment of this application;
FIG. 4 is a pressure distribution diagram drawn based on data of pressure applied by a passenger to different positions of a seat;
FIG. 5 shows a side view of a pressure sensor according to an embodiment of this application;
FIG. 6 shows a front view of a first electrode layer according to an embodiment of this application;
FIG. 7 shows front views of examples of a first electrode layer and a second electrode layer;
FIG. 8 shows front views of other examples of a first electrode layer and a second electrode layer;
FIG. 9 shows front views of still other examples of a first electrode layer and a second electrode layer;
FIG. 10 shows a sectional view of a seat according to an embodiment of this application;
FIG. 11 shows a top view of a seat after a trim layer is removed according to an embodiment of this application;
FIG. 12 is a diagram of a circuit connection structure of an example of a second electrode layer; and
FIG. 13 is a diagram of a circuit connection structure of another example of a second electrode layer.

Reference numerals:
100: seat; 101: seat frame; 102: comfort layer; 103: trim layer; 104: sensor; 105: wire; 106: through hole; 107: listing trench; 110: cushion; 120: backrest; 121: air lumbar support; 122: air lumbar support height adjustment assembly; 123: headrest height adjustment assembly; 130: headrest; 140: leg rest; 150: adjustment base; 160: side bolster; 161: air side bolster; 170: adjustment mechanism; 180: control apparatus; 181: air pump; 182: lateral acceleration sensor;
200: pressure sensor; 200a: monitoring unit; 201: first electrode layer; 201a: non-electrode region; 201b: electrode region; 202: dielectric layer; 203: second electrode layer; 204: connection layer; 210: cushion pressure sensor; 220: backrest pressure sensor; 230: headrest pressure sensor; and 240: leg rest pressure sensor.

### DESCRIPTION OF EMBODIMENTS

The following describes implementations of this application in detail. Examples of the implementations are shown in accompanying drawings. Same or similar reference signs are always used to represent same or similar elements or elements having same or similar functions. The implementations described below with reference to the accompanying drawings are examples, and are merely used to explain this application, but cannot be understood as a limitation on this application.

In the descriptions of this application, it should be noted that, unless otherwise specified and limited, terms "mounting", and "connection" should be understood in a broad sense. For example, a connection may be a fixed connection, a detachable connection, or an integrated connection. Alternatively, a connection may be a mechanical connection or an electrical connection, or may mean mutual communication. Alternatively, a connection may be a direct connection, or an indirect connection through an intermediate medium, or may be a connection between two elements or an interaction relationship between two elements. A person of ordinary skill in the art may understand specific meanings of the foregoing terms in this application based on specific situations.

In the descriptions of this application, it should be understood that an orientation or a position relationship indicated by terms such as "up", "down", "side", "front", and "rear" is an orientation or a position relationship based on mounting, and is merely intended to describe this application and simplify the description, but is not intended to indicate or imply that a described apparatus or element needs to have a specific orientation or needs to be constructed and operated in a specific orientation. Therefore, such terms shall not be understood as a limitation on this application.

The following terms "first" and "second" are merely intended for a purpose of description, and shall not be understood as an indication or implication of relative importance or implicit indication of a quantity of indicated technical features. Therefore, a feature limited by "first" or "second" may explicitly or implicitly include one or more features. In the descriptions of embodiments of this application, unless otherwise specified, "a plurality of" means two or more than two.

The term "and/or" in this specification describes only an association relationship for describing associated objects and represents that three relationships may exist. For example, A and/or B may represent the following three cases: Only A exists, both A and B exist, and only B exists. In addition, the character "/" in this specification usually indicates an "or" relationship between the associated objects.

With gradual development of vehicle intelligence, the concept of an intelligent cockpit emerges, and becomes a key development direction of future vehicles. Adjustment of seats, as an important part of the cockpit, is also becoming intelligent. A seat adaptive adjustment system based on a sensor technology can improve ride comfort and safety of passengers, and has been widely used in the current automotive industry.

The seat adaptive adjustment system usually includes a plurality of sensors and a control apparatus. The plurality of sensors are mounted on a seat, and is configured to sense information of a passenger, for example, a height, a weight, and a body shape. The control apparatus is configured to automatically adjust the seat to an optimal position based on the information, so that parts of the seat can fully fit corresponding parts of a human body, and personalized comfortable experience can be provided for the passenger.

In a related technology, the plurality of sensors in the seat are usually electrically connected to the control apparatus through wires. Consequently, routing and layout of the wires in the seat are difficult due to a large quantity of sensors. A routing structure in the current technology causes a foreign-object sensation on a surface of the seat, and even affects ride comfort on the seat.

In view of this, embodiments of this application provide a seat. A routing structure of the wire connected to the sensor is optimized, to improve ride comfort on the seat, and prevent disposing of the sensor from greatly affecting ride comfort on the seat.

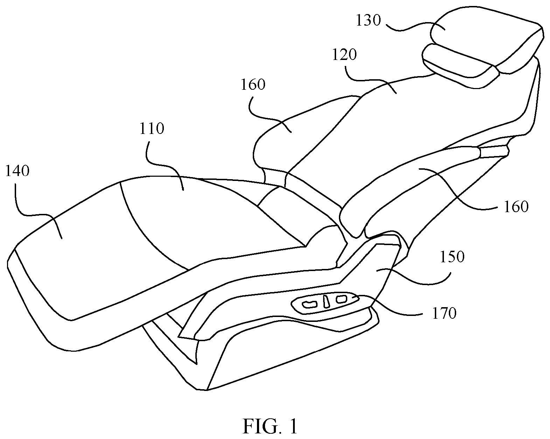

FIG. 1 is a diagram of a structure of a seat 100 according to an embodiment of this application. The seat 100 provided in embodiments of this application may be a seat of any vehicle like a car, a train, an electric multiple unit, a high-speed railway, or an airplane, or may be another seat that has requirements on comfort, for example, a household or commercial massage chair or a home chair. This is not limited thereto. The car may be, for example, a sedan, a truck, a bus, a pickup truck, a multi-purpose vehicle (multi-purpose vehicle, MPV), or a sport utility vehicle (sport utility vehicle, SUV). In addition, the vehicle may be an internal combustion engine vehicle, or may be a new energy vehicle like an electric vehicle, a hybrid electric vehicle, or an extended-range electric vehicle. The car may be a vehicle with a partial or full self-driving function. A type, a form, or the like of the vehicle is not limited in this application. The following uses an example in which the seat 100 is used in a car for description.

As shown in FIG. 1, the seat 100 may be disposed in an intelligent cockpit of a vehicle, and the seat 100 includes a cushion 110, a backrest 120, and a headrest 130. The cushion 110 is configured to support thighs and buttocks of a passenger, the backrest 120 is mounted behind the cushion 110, and is configured to support a waist and a back of the passenger, and the headrest 130 is mounted on top of the backrest 120, and is configured to support a head and a neck of the passenger.

In some examples, the seat 100 further includes an adjustment base 150, and the cushion 110 is movably mounted on a floor of the vehicle via the adjustment base 150. For example, the cushion 110 may be raised/lowered and/or moved forward/backward on the adjustment base 150, and the cushion 110 may be deflected relative to the adjustment base 150 to change a tilt angle of the cushion 110. In addition, softness/hardness of the cushion 110 can be adjusted, to meet use requirements of different passengers. For example, the softness/hardness of the cushion 110 may be adjusted by changing an air inflation volume of an air bag in the cushion 110.

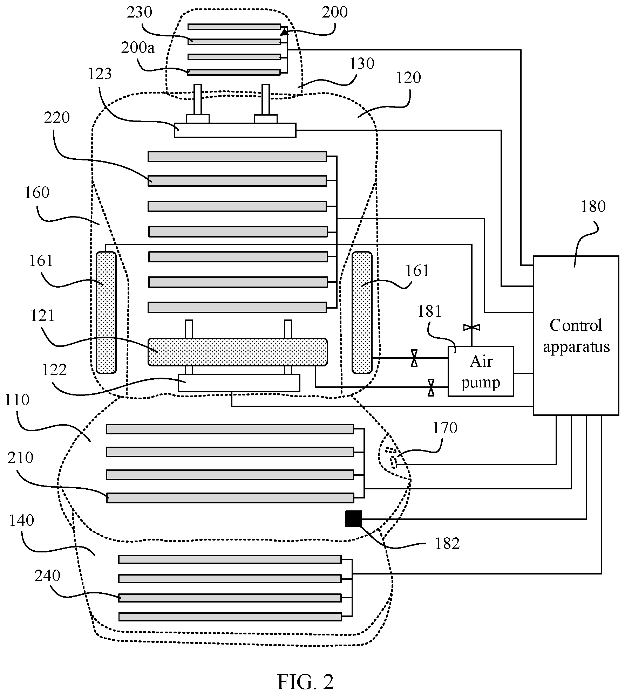

In some examples, the backrest 120 is rotatably mounted behind the cushion 110 (that is, a side away from a leg rest 140), so that a tilt angle of the backrest 120 is adjustable. In addition, an air bag may be further disposed in the backrest 120, and softness/hardness of the backrest 120 may be adjusted by changing the air inflation volume of the air bag. FIG. 2 is a diagram of an internal structure of a seat 100 according to an embodiment of this application. In some examples, as shown in FIG. 2, an air lumbar support 121 is disposed inside a lower part of the backrest 120. The air lumbar support 121 may be an air support that overlaps a waist region of a passenger, and is configured to support an L3 spine of the passenger, to better fit a natural physiological curve of a human body. This improves ride comfort. The air lumbar support 121 is disposed inside the backrest 120 via an air lumbar support height adjustment assembly 122 and can be raised/lowered. In this way, a height of the air lumbar support 121 can be adjusted by using the air lumbar support height adjustment assembly 122, to meet lumbar support requirements of passengers of different heights. For example, the air lumbar support height adjustment assembly 122 may include a power source like a motor, an electric motor, or a cylinder, and a transmission mechanism like a ball screw or a gear rack disposed between the power source and the air lumbar support 121. This is not limited thereto.

In some examples, the seat 100 further includes an air pump 181, the air lumbar support 121 is connected to the air pump 181 through a pipeline, and a solenoid valve is disposed on the pipeline. The air pump 181 inflates the air lumbar support 121 or deflates the air lumbar support 121 by controlling opening and closing of the solenoid valve. Support strength (support force) of the air lumbar support 121 for the passenger may be changed by changing an air inflation volume of the air lumbar support 121, to reasonably support the spine of the passenger.

In some examples, the air lumbar support 121 includes a plurality of air bags sequentially disposed in a height direction, the plurality of air bags are separately connected to the air pump 181 through pipelines, and the air bags can be separately controlled for inflation and deflation. In this case, the airbags at different heights may be inflated without using the air lumbar support height adjustment assembly 122, to accurately support lumbar parts of passengers of different heights.

In some examples, as shown in FIG. 2, a headrest height adjustment assembly 123 is further disposed in the backrest 120. The headrest height adjustment assembly 123 is configured to mount the headrest 130 on top of the backrest 120, so that the headrest 130 can be raised/lowered. A height of the headrest 130 can be adjusted via the headrest height adjustment assembly 123, to meet head support requirements of passengers of different sitting heights/heights. For example, the headrest height adjustment assembly 123 may include a power source like a motor, an electric motor, or a cylinder, and a transmission mechanism like a ball screw or a gear rack disposed between the power source and the headrest 130. This is not limited thereto.

In some examples, one or more speakers (not shown in the figure) are further disposed in the headrest 130, to provide more personalized and comfortable listening experience for the passenger sitting on the seat 100, for example, to implement functions such as independent sound zones, active noise cancellation, or spatial sound reproduction. For example, one speaker is disposed on each of two sides of the headrest 130, so that the left ear and the right ear of the passenger may listen to sound from respective speakers on adjacent sides.

In some examples, as shown in FIG. 1 and FIG. 2, the seat 100 further includes a leg rest 140 disposed on a front side of the cushion 110. The leg rest 140 is configured to support shins of the passenger, to improve ride comfort. The leg rest 140 is movably disposed on a front edge of the cushion 110. For example, the leg rest 140 may rotate and/or extend/retract relative to the cushion 110, and can be kept at a plurality of different positions, to meet use requirements of different passengers. In addition, when the passenger does not need to use the leg rest 140, the leg rest 140 may be further packed up through folding or the like.

In some examples, as shown in FIG. 1 and FIG. 2, the seat 100 further includes side bolsters 160 disposed on two sides of the backrest 120. The side bolsters 160 are configured to hold the passenger and provide lateral support force, to improve ride comfort and safety of the passenger.

In some examples, an air side bolster 161 is disposed in the side bolster 160, the air side bolster 161 is connected to the air pump 181 through a pipeline, and a solenoid valve is disposed on the pipeline. The air pump 181 inflates the air side bolster 161 or deflates the air side bolster 161 by controlling opening and closing of the solenoid valve. A holding degree and the lateral support force of the side bolster 160 on the passenger may be adjusted by changing an inflation volume of the air side bolster 161, to maximize ride comfort of the passenger.

In some examples, two air side bolsters 161 on the two sides of the backrest 120 are connected to the air pump 181. In this case, the two air side bolsters 161 may be separately controlled for inflation and deflation based on factors such as a sitting posture of the passenger and a driving status (for example, a sharp turn) of the vehicle. For example, an inflation volume of one air side bolster 161 may be increased while an inflation volume of the other air side bolster 161 remains unchanged.

In some examples, as shown in FIG. 1 and FIG. 2, the seat 100 further includes an adjustment mechanism 170 and a control apparatus 180. The control apparatus 180 may be disposed inside the seat, for example, disposed inside the adjustment base 150. The adjustment mechanism 170 is disposed on an outer wall of the adjustment base 150, so that the passenger can operate the adjustment mechanism 170 to manually adjust the seat 100. The control apparatus 180 may be electrically connected to the foregoing controlled components such as the air lumbar support height adjustment assembly 122, the headrest height adjustment assembly 123, the adjustment base 150, the air pump 181, the solenoid valve, and the adjustment mechanism 170 through a wire harness. The user may output an adjustment instruction to the control apparatus 180 by using the adjustment mechanism 170, and the control apparatus 180 outputs a control instruction to a corresponding controlled component according to the adjustment instruction, to manually adjust or control the seat 100.

In some examples, the adjustment mechanism 170 may include a button, a knob, a switch, a handle, a touchscreen, or another component that is convenient for the user to perform an operation. The user may output an adjustment instruction to the control apparatus 180 by using the adjustment mechanism 170, and the control apparatus 180 outputs a control instruction to a corresponding controlled component according to the adjustment instruction, to manually adjust the seat 100 by using the controlled component.

For example, a position or a tilt angle of the cushion 110 may be adjusted. In this case, under an operation of the user on the adjustment mechanism 170, the control apparatus 180 receives an adjustment instruction from the adjustment mechanism 170, and then may raise or lower a height of the cushion 110, move a position of the seat forward (that is, a vehicle traveling direction) or backward, adjust softness/hardness of the cushion 110, or the like by using the adjustment base 150. This is not limited thereto.

In addition, the passenger may further adjust the tilt angle and/or the softness/hardness of the backrest 120 by using the adjustment mechanism 170, adjust a support position (height) and/or an inflation volume of the air lumbar support 121, adjust a height of the headrest 130, adjust an angle and/or an extension amount of the leg rest 140, adjust an inflation volume of the air side bolster 161, and the like. This is not limited thereto.

In some examples, the seat 100 may further include functional components such as seat heating, seat ventilation, and seat massage. All the foregoing functional components may be communicatively connected to the control apparatus 180 through a wire harness. In this case, the passenger may further perform an operation on the adjustment mechanism 170, to adjust or control the functional components such as the seat heating, the seat ventilation, and the seat massage. For example, the passenger may enable or disable the seat heating by using the adjustment mechanism 170, and may further adjust a level or strength of the seat massage by using the adjustment mechanism 170.

In some examples, the control apparatus 180 may implement the foregoing functions and other functions by executing a corresponding program (software) by using a processor, or by using hardware such as a large-scale integrated circuit (large-scale integration, LSI) or an application-specific integrated circuit (application-specific integrated circuit, ASIC), or by using a combination of software and hardware.

For example, the control apparatus 180 may be a cockpit domain controller (cockpit domain controller, CDC), or may be any electronic control unit (electronic control unit, ECU) or microcontroller unit (microcontroller unit, MCU).

For example, in addition to manual adjustment on the seat 100 by using the adjustment mechanism 170, the seat 100 provided in embodiments of this application further has an adaptive adjustment function. This can both ensure safety of the passenger to a greater extent, and meet developing requirements of people for ride comfort, customization, and leisure on future seats.

Specifically, the seat 100 provided in embodiments of this application further includes a plurality of sensors. The plurality of sensors are electrically connected to the control apparatus 180, to sense information of the passenger, for example, a height, a weight, and a body shape (for example, fat/thin). The control apparatus 180 is configured to automatically adjust the seat 100 to an optimal position based on the information, so that parts of the seat 100 can fully fit corresponding parts of a human body, and personalized comfortable experience can be provided for the passenger.

In some examples, the plurality of sensors include at least one of the following sensors: a pressure sensor, a distance sensor, a displacement sensor, an acceleration sensor (for example, a lateral acceleration sensor 182 in FIG. 2), a body temperature sensor, a heart rate sensor, a humidity sensor, or any sensor that can monitor a physiological feature parameter or status of the passenger. In addition, the plurality of sensors may further include an image sensor or a camera that can capture an image of the passenger.

In some examples, as shown in FIG. 2, the plurality of sensors include a plurality of pressure sensors 200. The plurality of pressure sensors 200 are disposed at different positions of the seat 100, and are configured to collect data of pressure applied by the passenger to different positions of the seat 100. The control apparatus 180 can determine physiological feature parameters such as a sitting height, a height, a weight, and a body shape (fat/thin) of the passenger based on the pressure data, that is, perform passenger recognition based on the pressure data, and then perform adaptive adjustment on the seat 100 based on a recognition result.

As shown in FIG. 2, the plurality of pressure sensors 200 include a cushion pressure sensor 210, a backrest pressure sensor 220, a headrest pressure sensor 230, and a leg rest pressure sensor 240. The sensors may be electrically connected to the control apparatus 180 through wires (for example, metal wires or conductive fibers). The sensors may be, for example, pressure sensing pads.

The cushion pressure sensor 210 is disposed inside or on a surface of the cushion 110, and is configured to collect data of pressure applied by the passenger to a plurality of different positions of the cushion 110. The cushion pressure sensor 210 includes a plurality of monitoring units 200a arranged in an array at different positions of the cushion 110. The plurality of monitoring units 200a are configured to monitor pressure applied to different positions of the cushion 110, to obtain a plurality of pressure values, and send the plurality of pressure values obtained through monitoring to the control apparatus 180.

The backrest pressure sensor 220 is disposed inside or on a surface of the backrest 120, and is configured to collect data of pressure applied by the back of the passenger to a plurality of different positions of the backrest 120. The backrest pressure sensor 220 includes a plurality of monitoring units 200a arranged in an array at different positions of the backrest 120. The plurality of monitoring units 200a are configured to monitor pressure applied to different positions of the backrest 120, to obtain a plurality of pressure values, and send the plurality of pressure values obtained through monitoring to the control apparatus 180.

The headrest pressure sensor 230 is disposed inside or on a surface of the headrest 130, and is configured to collect data of pressure applied by the head of the passenger to a plurality of different positions of the headrest 130. The headrest pressure sensor 230 includes a plurality of monitoring units 200a arranged in an array at different positions of the headrest 130. The plurality of monitoring units 200a are configured to monitor pressure applied to different positions of the headrest 130, to obtain a plurality of pressure values, and send the plurality of pressure values obtained through monitoring to the control apparatus 180.

The leg rest pressure sensor 240 is disposed inside or on a surface of the leg rest 140, and is configured to collect data of pressure applied by the thins of the passenger to a plurality of different positions of the leg rest 140. The leg rest pressure sensor 240 includes a plurality of monitoring units 200a arranged in an array at different positions of the leg rest 140. The plurality of monitoring units 200a are configured to monitor pressure applied to different positions of the leg rest 140, to obtain a plurality of pressure values, and send the plurality of pressure values obtained through monitoring to the control apparatus 180.

For example, the cushion pressure sensor 210, the backrest pressure sensor 220, the headrest pressure sensor 230, and the leg rest pressure sensor 240 in embodiments of this application each include the plurality of monitoring units 200a arranged in an array. The arrangement in an array herein may be arranged in a one-dimensional array or may be arranged in a two-dimensional array. When the plurality of monitoring units 200a are arranged in a one-dimensional array, an arrangement direction may be any direction like an up-down direction (vertical direction), a horizontal direction (left-right direction of the seat), or a front-rear direction (a forward/backward direction of the vehicle). This is not limited in this application.

In some examples, as shown in FIG. 2, the cushion pressure sensor 210 is disposed inside or on the surface of the cushion 110, the monitoring units 200a of the cushion pressure sensor 210 are disposed in a long strip structure extending in the horizontal direction (that is, the left-right direction of the seat), and the plurality of monitoring units 200a are spaced, on an upper side surface of the cushion 110, in a one-dimensional array in the front-rear direction of the cushion 110. In this case, the cushion pressure sensor 210 can collect data of pressure at a plurality of different positions of the cushion 110 in the front-rear direction.

As shown in FIG. 2, the backrest pressure sensor 220 is disposed inside or on the surface of the backrest 120, the monitoring units 200a of the backrest pressure sensor 220 are disposed in a long strip structure extending in the horizontal direction, and the plurality of monitoring units 200a are spaced, on a front side surface of the backrest 120, in a one-dimensional array in the up-down direction. In this case, the backrest pressure sensor 220 can collect data of pressure at a plurality of different positions of the backrest 120 in the up-down direction.

As shown in FIG. 2, the headrest pressure sensor 230 is disposed inside or on the surface of the headrest 130, the monitoring units 200a of the headrest pressure sensor 230 are disposed in a long strip structure extending in the horizontal direction, and the plurality of monitoring units 200a are spaced, on a front side surface of the headrest 130, in a one-dimensional array in the up-down direction. In this case, the headrest pressure sensor 230 can collect data of pressure at a plurality of different positions of the headrest 130 in the up-down direction.

As shown in FIG. 2, the leg rest pressure sensor 240 is disposed inside or on the surface of the leg rest 140, the monitoring units 200a of the leg rest pressure sensor 240 are disposed in a long strip structure extending in the horizontal direction, and the plurality of monitoring units 200a are spaced, on an upper side surface of the leg rest 140, in a one-dimensional array in the front-rear direction of the leg rest 140. In this case, the leg rest pressure sensor 240 can collect data of pressure at a plurality of different positions of the leg rest 140 in the front-rear direction.

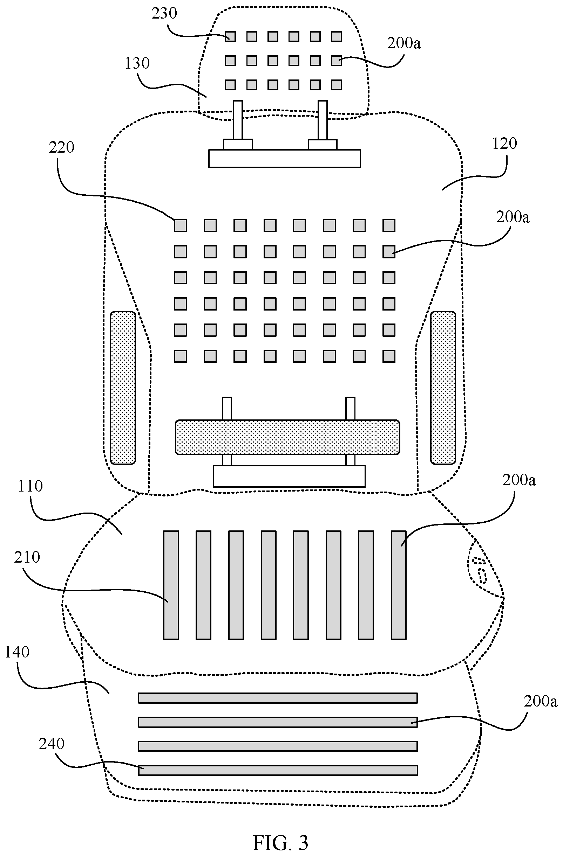

FIG. 3 is a mounting diagram of an example of a pressure sensor 200 according to an embodiment of this application. In some examples, as shown in FIG. 3, the cushion pressure sensor 210 is disposed on the cushion 110, the monitoring units 200a of the cushion pressure sensor 210 are disposed in a long strip structure extending in the front-rear direction, and the plurality of monitoring units 200a are spaced, on the upper side surface of the cushion 110, in a one-dimensional array in the horizontal direction of the cushion 110. In this case, the cushion pressure sensor 210 can collect data of pressure at a plurality of different positions of the cushion 110 in the horizontal direction.

As shown in FIG. 3, the backrest pressure sensor 220 is disposed on the backrest 120, the plurality of monitoring units 200a of the backrest pressure sensor 220 are disposed in a rectangular block structure (or in another shape like a triangle, a trapezoid, or a circle), and the plurality of monitoring units 200a are arranged on the front side surface of the backrest 120 in a two-dimensional array. In this case, the backrest pressure sensor 220 can collect data of pressure at a plurality of positions of the backrest 120 on a two-dimensional plane (namely, the front side surface).

As shown in FIG. 3, the headrest pressure sensor 230 is disposed on the headrest 130, the plurality of monitoring units 200a of the headrest pressure sensor 230 are disposed in a rectangular block structure (or in another shape like a triangle, a trapezoid, or a circle), and the plurality of monitoring units 200a are arranged on the front side surface of the headrest 130 in a two-dimensional array. In this case, the headrest pressure sensor 230 can collect data of pressure at a plurality of positions of the headrest 130 on a two-dimensional plane (namely, the front side surface).

In some examples, as shown in FIG. 2 to FIG. 4, based on monitoring precision requirements for different body parts, parameters such as sizes (for example, widths and/or lengths), shapes, areas, setting density, quantities, and spacings of the monitoring units 200a of the cushion pressure sensor 210, the backrest pressure sensor 220, the headrest pressure sensor 230, and the leg rest pressure sensor 240 may be set differently, to reduce material costs of the sensors while meeting the monitoring requirements.

For example, the setting density of the monitoring units 200a of the headrest pressure sensor 230 is greater than that of another sensor. In other words, a largest quantity of monitoring units 200a are disposed in a unit area of the headrest 130, to meet a high-precision pressure monitoring requirement on the head of the passenger.

For another example, the quantity of monitoring units 200a of the leg rest pressure sensor 240 is less than that of another sensor. In other words, a smallest quantity of monitoring units 200a are disposed on the leg rest 140, to reduce material costs of the sensors while meeting a pressure monitoring requirement on the leg of the user.

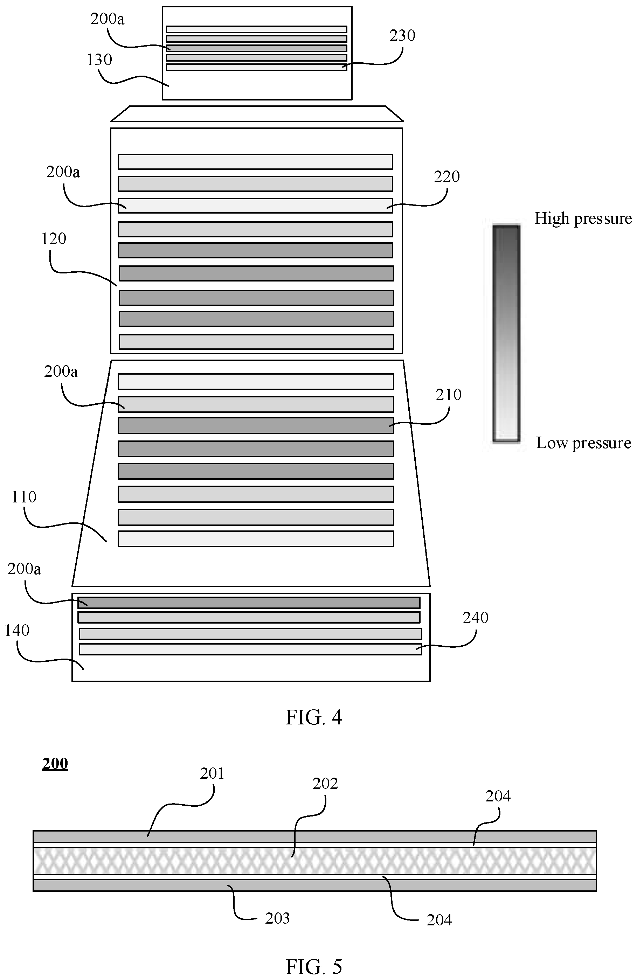

For example, with reference to FIG. 2 and FIG. 4, the headrest pressure sensor 230 includes 10 monitoring units 200a. In other words, 10 monitoring units 200a are disposed on the headrest 130, each monitoring unit 200a is of a strip structure, a width of the strip structure is 1 centimeter (cm), and a spacing between adjacent monitoring units 200a is 0.5 cm. The cushion pressure sensor 210 and the backrest pressure sensor 220 each include 10 monitoring units 200a. In other words, the cushion 110 and the backrest 120 each are disposed with 10 monitoring units 200a, each monitoring unit 200a is of a strip structure, a width of the strip structure is 2 cm, and a spacing between adjacent monitoring units 200a is 2 cm. The leg rest pressure sensor 240 includes six monitoring units 200a. In other words, six monitoring units 200a are disposed on the leg rest 140, each monitoring unit 200a is of a strip structure, a width of the strip structure is 2 cm, and a spacing between adjacent monitoring units 200a is 1 cm.

After receiving the pressure data collected by the cushion pressure sensor 210, the backrest pressure sensor 220, the headrest pressure sensor 230, and the leg rest pressure sensor 240, the control apparatus 180 can recognize physiological feature parameters such as a sitting height, a height, a weight, and a body shape (fat/thin) of the passenger based on the pressure data and location information of each monitoring unit 200a, and can adaptively adjust the seat 100 based on the physiological feature parameters.

Specifically, the pressure data obtained by the control apparatus 180 is a pressure value detected by each monitoring unit 200a, and the control apparatus 180 stores the location information of each monitoring unit 200a. Therefore, the control apparatus 180 may draw, based on the pressure value detected by the monitoring unit 200a and the location information of the monitoring unit 200a, a pressure distribution diagram shown in FIG. 4. FIG. 4 is a pressure distribution diagram drawn based on data of pressure applied by a passenger to different positions of a seat 100. In

FIG. 4, deeper gray of the monitoring unit 200a indicates a larger pressure value detected by the monitoring unit 200a, and lighter gray of the monitoring unit 200a indicates a smaller pressure value detected by the monitoring unit 200a. The control apparatus 180 can obtain the physiological feature parameters such as a sitting height, a height, a weight, and a body shape (thin, normal, overweight, or severely overweight) of the passenger based on the pressure distribution diagram and a preset algorithm (the algorithm may be determined based on a size feature of a human body), recognize a current sitting posture of the passenger, and adaptively adjust the seat 100 accordingly.

In some examples, the adaptive adjustment herein may include at least one of the following adjustment:
adjusting a height of the headrest 130, adjusting a height of the air lumbar support 121, adjusting an inflation volume of the air lumbar support 121, adjusting an inflation volume of the air side bolster 161, adjusting a height, a front-rear position, a tilt angle, or softness/hardness of the cushion 110, adjusting a speaker in the headrest 130, adjusting a tilt angle or softness/hardness of the backrest 120, adjusting a tilt angle or an extension amount of the leg rest 140, and the like.

The following continues to describe structure details of the pressure sensor 200 in embodiments of this application with reference to FIG. 5 to FIG. 9.

In some examples, the pressure sensor 200 (for example, the cushion pressure sensor 210, the backrest pressure sensor 220, the headrest pressure sensor 230, or the leg rest pressure sensor 240) may be a flexible pressure sensor, to meet both ride comfort on the seat 100 and the pressure sensing requirement. For example, the pressure sensor 200 may be a flexible resistive pressure sensor or a flexible capacitive pressure sensor.

FIG. 5 shows a side view of a pressure sensor 200 according to an embodiment of this application. As shown in FIG. 5, in this embodiment of this application, the pressure sensor 200 is a flexible capacitive pressure sensor. The capacitive sensor has advantages such as high precision, low power consumption, a fast response speed, a simple manufacturing process, and good thermal resistance. A working principle of the capacitive sensor is that thickness of a dielectric layer is changed by applying pressure, so that capacitance of the dielectric layer changes. The capacitance change is converted into an electrical signal, and then the electrical signal is used to determine a pressure value.

As shown in FIG. 5, the pressure sensor 200 may be formed by sequentially stacking a plurality of flexible functional film layers. In this case, the entire pressure sensor 200 may form a pressure sensing pad, and the plurality of monitoring units 200a are arrayed on the pressure sensing pad in a specific manner. The pressure sensor 200 may be embedded in a wrapping layer of the seat 100.

Specifically, the pressure sensor 200 includes a first electrode layer 201, a dielectric layer 202, and a second electrode layer 203 that are sequentially stacked. The first electrode layer 201 and the second electrode layer 203 may be respectively disposed on two opposite surfaces of the dielectric layer 202 via a connection layer 204, to form a "sandwich" structure. For example, the connection layer 204 may be a thermoplastic polyurethane (thermoplastic polyurethane, TPU) adhesive layer, and the dielectric layer 202 may be a spacer fabric or a foam material. When pressure is applied to the surface of the pressure sensor 200, thickness of the dielectric layer 202 in the middle changes, so that the thickness is less than initial thickness of the pressure sensor 200 to which pressure is not applied. In this case, a distance between the first electrode layer 201 and the second electrode layer 203 becomes smaller, and capacitance between plates formed by the two electrode layers increases. The thickness of the dielectric layer 202 may be adjusted based on a sensitivity requirement of the sensor for sensing pressure.

In some examples, with reference to FIG. 2 to FIG. 5, it is considered that ranges of pressure applied by different body parts of the passenger to the seat 100 may be different. Sensitivities (namely, pressure sensing ranges) of the monitoring units 200a of the cushion pressure sensor 210, the backrest pressure sensor 220, the headrest pressure sensor 230, and the leg rest pressure sensor 240 may be set to be different, so that the sensitivities can match the ranges of the pressure applied by the corresponding body parts to the seat 100. This meets the sensitivity requirement for pressure monitoring of different body parts.

For example, it is considered that pressure applied by the head of the passenger to the headrest 130 and pressure applied by the leg of the passenger to the leg rest 140 are small. Sensitivities of the headrest pressure sensor 230 and the leg rest pressure sensor 240 are higher than sensitivities of the cushion pressure sensor 210 and the backrest pressure sensor 220, that is, the monitoring units 200a of the headrest 130 and the leg rest 140 have high sensing sensitivities. A higher sensitivity corresponds to a smaller pressure sensing range, to meet a pressure monitoring requirement for the head and the leg of the passenger.

In some examples, the sensitivity of the sensor depends on thickness and compressibility of the dielectric layer. For example, a thinner dielectric layer indicates a higher sensitivity and a smaller pressure sensing range. A thicker dielectric layer indicates a lower sensitivity and a larger pressure sensing range. Stronger compressibility of the dielectric layer indicates a higher sensitivity. Weaker compressibility of the dielectric layer indicates a lower sensitivity. Lower material density of the dielectric layer indicates a softer material and stronger compressibility. Therefore, the sensitivity of each sensor may be adjusted by changing the thickness of the dielectric layer 202 and/or the material density and softness/hardness of the dielectric layer of each sensor.

For example, thickness of the dielectric layers 202 of the headrest pressure sensor 230 and the leg rest pressure sensor 240 may range from 0.5 millimeter (mm) to 2 mm, for example, may be 0.8 mm, 1 mm, 1.2 mm, or 1.5 mm. Thickness of the dielectric layer 202 of the backrest pressure sensor 220 may range from 2 mm to 4 mm, for example, may be 2.5 mm, 3 mm, 3.5 mm, or 3.8 mm. Thickness of the dielectric layer 202 of the cushion pressure sensor 210 may range from 3 mm to 5 mm, for example, may be 3.5 mm, 4 mm, 4.5 mm, or 4.8 mm.

For example, material density (for example, spacer yarn density of a spacer fabric or a ppi value of filter cotton) of the dielectric layers 202 of the headrest pressure sensor 230 and the leg rest pressure sensor 240 is less than material density of the dielectric layers 202 of the cushion pressure sensor 210 and the backrest pressure sensor 220.

In some examples, the dielectric layer 202 may include a spacer fabric layer and/or a filter cotton layer. This is not limited thereto.

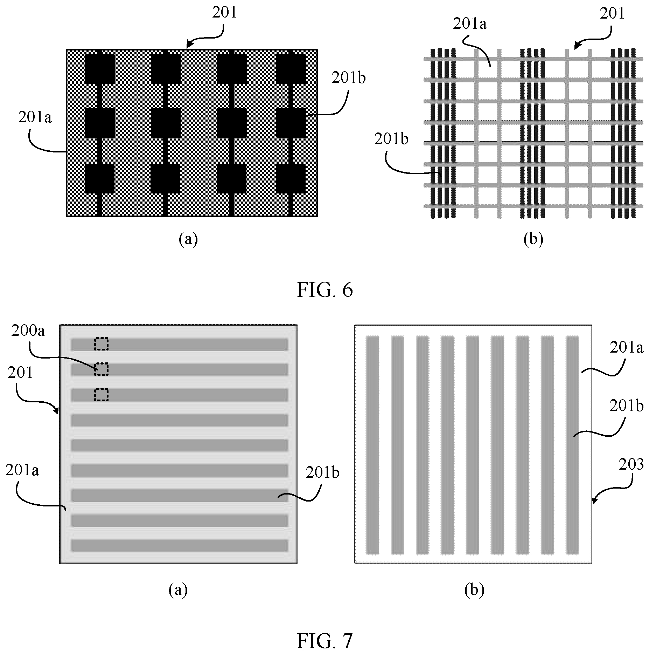

The first electrode layer 201 and the second electrode layer 203 may be of a same structure or different structures. This is not limited in this application. The following uses the first electrode layer 201 as an example to describe the electrode layer in embodiments of this application. FIG. 6 shows a front view of a first electrode layer 201 according to an embodiment of this application. As shown in FIG. 6, the first electrode layer 201 includes a textile fabric. For example, the first electrode layer 201 may be a knitted or woven fabric. The first electrode layer 201 includes a non-electrode region 201a and an electrode region 201b, the non-electrode region 201a includes a non-conductive fiber, and the electrode region 201b includes a conductive fiber. Air permeability of the non-electrode region 201a is better than that of the electrode region 201b.

Air permeability (air permeability) is a property of a fabric to permit air to pass through the fabric under a pressure difference between two surfaces of the fabric, that is, a volume of air flowing through per unit area of the fabric per unit time at a given pressure difference between the two surfaces of the fabric. Higher or better air permeability indicates that air is easier to pass through the fabric.

In embodiments of this application, the air permeability of the non-electrode region 201a may be different from that of the electrode region 201b, and the non-electrode region 201a has better air permeability, to ensure that the pressure sensor 200 has good overall air permeability, and improve ride comfort on the seat 100. However, air permeability of the electrode region 201b is poor, and more attention may be paid to pressure sensing performance of a monitoring unit 200a in the electrode region 201b, for example, density of conductive fibers may be increased in the electrode region 201b. This can ensure that the monitoring unit 200a has stable and reliable sensing performance. In other words, in some embodiments of this application, based on the foregoing setting, both the structural stability (pressure sensing requirements) of the monitoring unit 200a and overall air permeability of the fabric can be ensured, to prevent disposing of the pressure sensor 200 from compromising ride comfort on the seat 100.

As shown in (a) in FIG. 6, the first electrode layer 201 may be a knitted fabric. The electrode region 201b formed by the conductive fibers has large coil density, that is, a fabric porosity is small, and a structure is dense and stable. This helps stable signals of a capacitive sensor (that is, the monitoring unit 200a) formed between the upper and lower electrodes. The non-electrode region formed by the non-conductive fibers has small coil density, that is, a fabric porosity is large, and a structure is sparse and has good air permeability.

As shown in (b) in FIG. 6, the first electrode layer 201 may be a woven fabric. Warp yarns or weft yarns in different regions are arranged at different density. For example, warp yarns at different positions are arranged at different densities, so that the warp yarns have different sparsity degrees. The weft yarns may have same arrangement density. In this case, warp yarns located in the electrode region 201b are conductive fibers (black lines in the figure) and are arranged at large density, and warp yarns located in the non-electrode region 201a are non-conductive fibers (gray lines in the figure) and are arranged at small density. The weft yarns may all be non-conductive fibers and are arranged at same density at any position.

In some examples, the weft yarns may alternatively be arranged at different density, that is, different sparsity degrees, at difference positions, and the warp yarns are arranged at same density. In this case, the weft yarns in the electrode region 201b are conductive fibers and are arranged at large density, and the weft yarns in the non-electrode region 201a are non-conductive fibers and are arranged at small density. The warp yarns may all be non-conductive fibers and are arranged at same density at any position.

In some examples, the foregoing two manners may alternatively be combined, that is, the warp yarns and the weft yarns are arranged at different density, that is, different sparsity degrees, at difference positions.

In some examples, for the first electrode layer 201 formed by a woven structure, a surface of the fabric of the non-electrode region 201a may be punched by using a process like laser cutting, to ensure the air permeability of the non-electrode region 201a while ensuring that the electrode region 201b is of a dense structure.

In some examples, for the first electrode layer 201 formed by a knitted structure or a woven structure, thickness of the fibers may be adjusted, to adjust the air permeability of the non-electrode region 201a and adjust the structural stability of the electrode region 201b. For example, thin non-conductive fibers may form the non-electrode region 201a, and thick conductive fibers may form the electrode region 201b.

In some examples, the non-conductive fiber may be a natural fiber, for example, a cotton fiber, a wool fiber, a linen fiber, or a silk fiber; or may be a synthetic fiber, for example, a terylene fiber, an elastane fiber, an acrylic fiber, an aramid fiber, a nylon fiber, a polyacrylonitrile fiber, a polypropylene fiber, a polyester fiber, or a nylon fiber. This is not limited thereto.

In some examples, the conductive fiber may be a carbon fiber, for example, a carbon fiber or a graphite fiber; or may be a natural fiber or a synthetic fiber whose surface is coated with conductive particles, for example, coated with conductive materials such as gold, silver, silver nanowires, or copper; or may be a conductive wire, for example, a copper wire, a silver wire, or a stainless steel wire. This is not limited thereto.

The capacitive sensor array formed between the first electrode layer 201 and the second electrode layer 203 may be a one-dimensional capacitive array between the plates, or may be a two-dimensional capacitive array between the plates. The capacitive sensor herein is the foregoing monitoring unit 200a, that is, each capacitive sensor corresponds to one monitoring unit 200a, and the capacitive sensor array is the foregoing monitoring unit 200a array. For the one-dimensional capacitive array, the upper-layer and lower-layer electrode fabrics form electrode regions 201b that overlap in a same direction, for example, overlapped row electrodes (that is, the electrode region 201b is in a long strip shape and horizontally extends) and overlapped column electrodes (that is, the electrode region 201b is in a long strip shape and vertically extends). In this case, each row or each column is one capacitive sensor. For the two-dimensional capacitive array, the upper-layer and lower-layer electrode fabrics form cross electrode regions in opposite directions. For example, upper-surface electrode fabrics have electrode regions 201b in a row direction, and lower-surface electrode fabrics have electrode regions 201b in a column direction. A region in which each row and each column intersect is one capacitive sensor.

FIG. 7 shows front views of examples of a first electrode layer 201 and a second electrode layer 203, (a) in FIG. 7 shows a front view of the first electrode layer 201, and (b) in FIG. 7 shows a front view of the second electrode layer 203. As shown in FIG. 7, in correspondence with the monitoring units 200a of the backrest pressure sensor 220 and the headrest pressure sensor 230 in FIG. 3, the first electrode layer 201 includes a plurality of electrode regions 201b in a strip structure, each electrode region 201b extends in a horizontal direction, and the plurality of electrode regions 201b are sequentially disposed in parallel and spaced apart in a vertical direction. The electrode regions 201b at the first electrode layer 201 may be denoted as row electrodes. The second electrode layer 203 includes a plurality of electrode regions 201b in a strip structure, each electrode region 201b extends in a vertical direction, and the plurality of electrode regions 201b are sequentially disposed in parallel and spaced apart in a horizontal direction. The electrode regions 201b at the second electrode layer 203 may be denoted as column electrodes. In this case, the electrode regions 201b at the first electrode layer 201 and the electrode regions 201b at the second electrode layer 203 are disposed in a cross manner, and a region in which each row electrode and each column electrode intersect (are opposite or overlap) forms one capacitive sensor, that is, forms the monitoring units 200a of the backrest pressure sensor 220 and the headrest pressure sensor 230 in FIG. 3. The capacitive sensors are electrically connected to the control apparatus 180, and the control apparatus 180 can determine pressure values and pressure distribution on the surface of the seat by reading capacitance value changes.

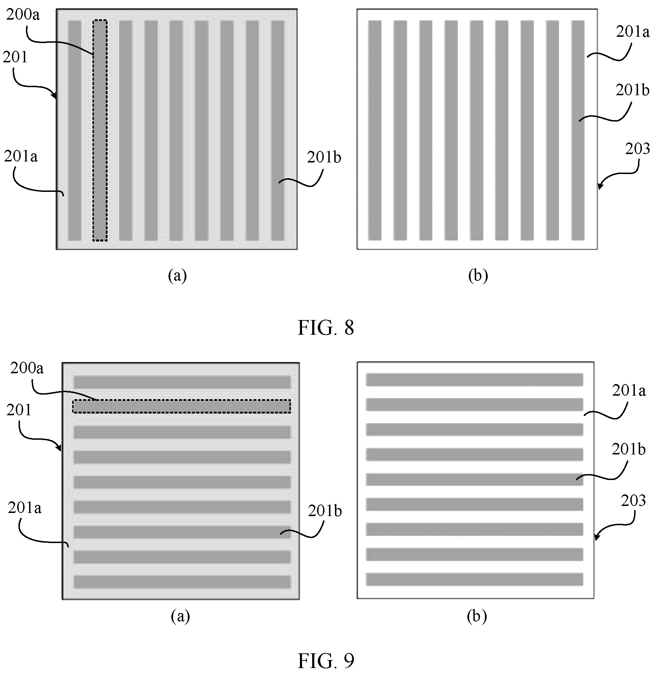

FIG. 8 shows front views of other examples of a first electrode layer 201 and a second electrode layer 203, (a) in FIG. 8 shows a front view of the first electrode layer 201, and (b) in FIG. 8 shows a front view of the second electrode layer 203. As shown in FIG. 8, in correspondence with the monitoring units 200a of the cushion pressure sensor 210 in FIG. 3, the first electrode layer 201 and the second electrode layer 203 are of a same structure, and each include a plurality of electrode regions 201b in a strip structure, each electrode region 201b extends in a vertical direction, and the plurality of electrode regions 201b are sequentially disposed in parallel and spaced apart in a horizontal direction. In this case, the electrode regions 201b at the first electrode layer 201 and the electrode regions 201b at the second electrode layer 203 are parallel to and directly face each other (overlap), and each pair of electrode regions 201b that directly face each other or overlap form one capacitive sensor, that is, form the monitoring units 200a of the cushion pressure sensor 210 in FIG. 3.

FIG. 9 shows front views of still other examples of a first electrode layer 201 and a second electrode layer 203, (a) in FIG. 9 shows a front view of the first electrode layer 201, and (b) in FIG. 9 shows a front view of the second electrode layer 203. As shown in FIG. 9, in correspondence with the monitoring units 200a in FIG. 2, the first electrode layer 201 and the second electrode layer 203 are of a same structure, and each include a plurality of electrode regions 201b in a strip structure, each electrode region 201b extends in a horizontal direction, and the plurality of electrode regions 201b are sequentially disposed in parallel and spaced apart in a vertical direction. In this case, the electrode regions 201b at the first electrode layer 201 and the electrode regions 201b at the second electrode layer 203 are parallel to and directly face each other (overlap), and each pair of electrode regions 201b that directly face each other or overlap form one capacitive sensor, that is, form the monitoring units 200a in FIG. 2.

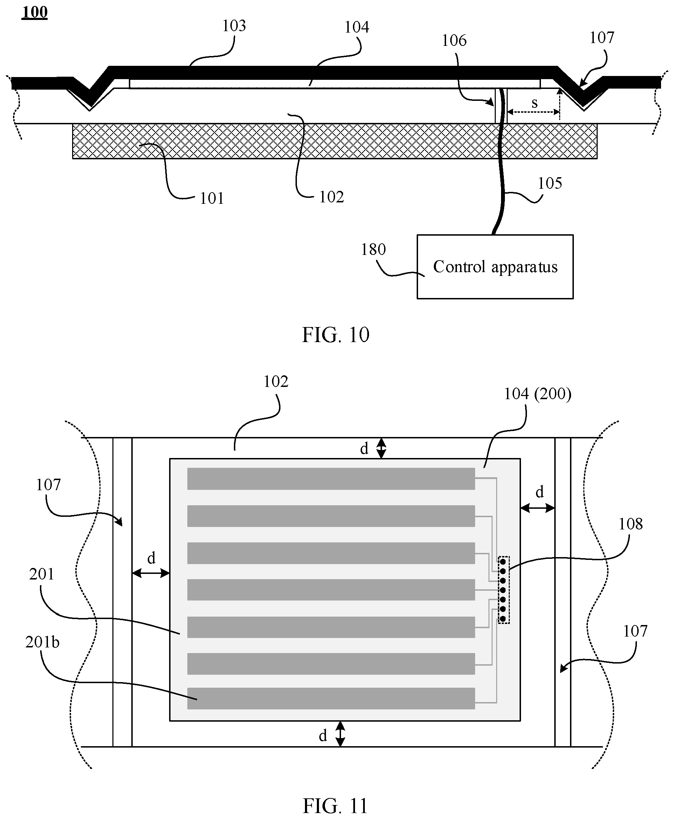

The following continues to describe the seat 100 provided in embodiments of this application with reference to FIG. 10 to FIG. 13. FIG. 10 shows a sectional view of a seat 100 according to an embodiment of this application. As shown in FIG. 10, the seat 100 includes a seat frame 101, a comfort layer 102 disposed outside (for example, wrapping) the seat frame 101, and a trim layer 103 disposed outside the comfort layer 102. The comfort layer 102 is provided with a through hole 106.

The seat 100 further includes a sensor 104 located between the comfort layer 102 and the trim layer 103. The sensor 104 is electrically connected to the control apparatus 180 through a wire 105 that passes through the through hole 106, so that the control apparatus 180 can adaptively adjust or control the seat 100 based on a monitoring signal of the sensor 104.

The comfort layer 102 of the seat 100 provided in embodiments of this application is provided with the through hole 106, and the wire 105 can pass through the through hole 106 and extend into the seat 100, so that the sensor 104 is electrically connected to the control apparatus 180. Because the wire 105 is guided and accommodated in the through hole 106, instead of being randomly clamped between the trim layer 103 and the comfort layer 102, a foreign-object sensation on a surface of the trim layer 103 caused by the wire 105 can be effectively alleviated, and passenger ride comfort can be improved. In addition, an edge of the comfort layer 102 is usually subject to large extrusion pressure from the trim layer 103, and is a sensitive region that greatly affects ride comfort. In this application, the through hole 106 is disposed, so that the wire 105 does not need to bypass the edge of the comfort layer 102 and extend into the seat 100. Therefore, the wire 105 does not cause a foreign-object sensation at the edge of the comfort layer 102, and passenger ride comfort can be improved. In some embodiments of this application, a routing structure of the wire 105 connected to the sensor 104 is optimized, to improve ride comfort on the seat, and prevent disposing of the sensor 104 from greatly affecting ride comfort on the seat 100.

In some examples, the seat frame 101 may be a metal frame or a plastic frame. This is not limited thereto.

In some examples, the seat frame 101 may be a cushion frame, a backrest frame, a headrest frame, or a leg rest frame. Alternatively, the seat frame 101 includes at least one of a cushion frame, a backrest frame, a headrest frame, and a leg rest frame.

In some examples, the comfort layer 102 may include a foam layer or a foam layer. This is not limited thereto. For example, the comfort layer 102 may include one or more of a polypropylene foam layer, a polyurethane foam layer, a sponge layer, a porous elastic material layer, a foam layer, a rubber layer, a plastic layer, and a cotton latex layer.

In some examples, the trim layer 103 may include a leather layer and/or a fabric layer. This is not limited thereto.

In some examples, the sensor 104 includes at least one of a pressure sensor, a temperature sensor, a heart rate sensor, a blood pressure sensor, a humidity sensor, a distance sensor, a displacement sensor, or an acceleration sensor. This is not limited thereto. For example, the sensor 104 may be a capacitive pressure sensing pad, for example, the pressure sensor 200 shown in FIG. 2 to FIG. 9.

In some examples, the wire 105 may be a metal wire, or may be any other line structure that can be electrically connected, for example, a conductive fiber. The wire 105 may include one wire, or may include a plurality of wires that are electrically insulated from each other (that is, the wire 105 may be a wire harness). This is not limited in this application.

In some examples, the through hole 106 penetrates an inner side surface and an outer side surface of the comfort layer 102. For example, the through hole 106 vertically penetrates the comfort layer 102, and a cross-sectional (hole opening) shape of the through hole 106 may be any regular or irregular shape like a circle, an ellipse, a triangle, a quadrilateral (a rectangle, a rhombus, or a trapezoid), or a pentagon. The through hole 106 may include one through hole, or may include a plurality of through holes. This is not limited in this application. For example, the wire 105 may include a plurality of wires, and the plurality of wires may all pass through a unique through hole 106, or may be distributed in a plurality of through holes 106.

In some examples, as shown in FIG. 10, a distance s between the through hole 106 and the edge of the comfort layer 102 ranges from 10 millimeters to 20 millimeters (mm), for example, the distance s may be 11 mm, 12 mm, 15 mm, 16 mm, or 18 mm. For example, the distance s between the through hole 106 and the edge of the comfort layer 102 may be a minimum distance between the through hole 106 and the edge of the comfort layer 102, for example, a minimum distance between an opening edge of the through hole 106 and the edge of the comfort layer 102.

In some examples, as shown in FIG. 10 and FIG. 11, at least one edge of the comfort layer 102 is provided with a listing trench 107. A listing member like a listing wire, a listing strip or the like (not shown in the figure) may be disposed in the listing trench 107. Two ends of the listing member are respectively connected to the comfort layer 102 and the trim layer 103, so that the trim layer 103 can be reliably attached to the surface of the comfort layer 102.

In this case, a trench edge that is adjacent to the through hole 106 and that is of the listing trench 107 may be considered as an edge of the comfort layer 102. Therefore, the "distance between the through hole 106 and the edge of the comfort layer 102" may also be understood as a distance between the through hole 106 and the listing trench 107, for example, may be a minimum distance between the opening edge of the through hole 106 and the trench edge of the listing trench 107.

If the distance between the through hole 106 and the edge of the comfort layer 102 is small, the wire 105 (for example, the wire harness) in the through hole 106 may be severely squeezed by the trim layer 103 at the edge of the comfort layer 102, which affects ride comfort and signal transmission performance of the sensor 104 after wrapping. If the distance between the through hole 106 and the edge of the comfort layer 102 is large, the through hole 106 and the wire 105 in the through hole are too close to a middle region of the seat, which also affects ride comfort. In some embodiments of this application, the distance between the through hole 106 and the edge of the comfort layer 102 is configured, to ensure signal transmission effect of the sensor 104 and ride comfort on the seat 100.

In some examples, as shown in FIG. 10, the control apparatus 180 is located inside the seat 100, for example, may be located on an inner side of the seat frame 101. In addition, the seat frame 101 is usually of a hollow structure, and the control apparatus 180 may also be disposed inside the seat frame 101. The control apparatus 180 may alternatively be disposed outside the seat 100. A specific location of the control apparatus 180 is not particularly limited in this application.

FIG. 11 shows a top view of a seat 100 after a trim layer 103 is removed according to an embodiment of this application. As shown in FIG. 10 and FIG. 11, the sensor 104 is of a sheet structure and disposed on the comfort layer 102, and projection of the sensor 104 on the comfort layer 102 is located on an inner side of the edge of the comfort layer 102. Based on the foregoing setting, the sensor 104 can cover the surface of the comfort layer 102 to ensure flatness of the seat surface. In addition, the projection of the sensor 104 is located on the inner side of the edge of the comfort layer 102, that is, any edge of the sensor 104 does not exceed the edge of the comfort layer 102. Therefore, this can ensure ride comfort at the edge of the comfort layer 102, and prevent the sensor 104 from being severely squeezed by the trim layer 103 at the edge of the comfort layer 102, to ensure that the sensor 104 can stably operate for long time.

In some examples, the sensor 104 may be a capacitive pressure sensing pad with a flexible structure, for example, the sensor 104 may be the pressure sensor 200 shown in FIG. 2 to FIG. 9.

In some examples, as shown in FIG. 11, both the sensor 104 and the comfort layer 102 are of a rectangular structure, and an edge of the sensor 104 is parallel to an edge of one corresponding side of the comfort layer 102.

In some examples, as shown in FIG. 11, a distance d between the edge of the sensor 104 and the corresponding side of the comfort layer 102 ranges from 10 mm to 20 mm, for example, the distance d may be 11 mm, 12 mm, 15 mm, 16 mm, or 18 mm. For example, the distance d between the sensor 104 and the edge of the comfort layer 102 may be a minimum distance between the sensor 104 and the edge of the comfort layer 102, for example, a minimum distance between the edge of the sensor 104 and the edge of the comfort layer 102.

In some examples, as shown in FIG. 10 and FIG. 11, at least one edge of the comfort layer 102 is provided with a listing trench 107. In this case, a trench edge that is adjacent to the sensor 104 and that is of the listing trench 107 may be considered as an edge of the comfort layer 102. Therefore, the "distance between the sensor 104 and the edge of the comfort layer 102" may also be understood as a distance between the sensor 104 and the listing trench 107, for example, may be a minimum distance between the edge of the sensor 104 and the trench edge of the listing trench 107.

If the distance between the sensor 104 and the edge of the comfort layer 102 is small, the sensor 104 may be severely squeezed by the trim layer 103 at the edge of the comfort layer 102, which affects ride comfort and monitoring performance of the sensor 104 after wrapping. If the distance between the sensor 104 and the edge of the comfort layer 102 is large, an area of the sensor 104 is small, that is, the sensor 104 covers a small area of the comfort layer 102, which also affects monitoring performance of the sensor 104. In some embodiments of this application, the distance between the through hole 106 and the edge of the comfort layer 102 is configured, to ensure monitoring performance of the sensor 104 and ride comfort on the seat 100.

In some examples, as shown in FIG. 10, the sensor 104 is of a sheet structure and is laid on the comfort layer 102, and the sensor 104 covers the through hole 106. In the setting in which the sensor 104 covers the through hole 106, impact of the through hole 106 and the wire 105 in the through hole on ride comfort can be reduced through covering the through hole 106 by the sensor 104. In addition, because the sensor 104 does not need to avoid the through hole 106, the area of the sensor 104 can be set to be larger. This can improve monitoring performance of the sensor 104.

In some examples, as shown in FIG. 5 to FIG. 9 and FIG. 11, the sensor 104 includes a capacitive pressure sensing pad with a flexible structure. For example, the sensor 104 may be the foregoing pressure sensor 200, and includes the first electrode layer 201, the dielectric layer 202, and the second electrode layer 203 that are sequentially stacked. The first electrode layer 201 and the second electrode layer 203 each include the non-electrode region 201a and the electrode region 201b.

The electrode region 201b of the first electrode layer 201 and the electrode region 201b of the second electrode layer 203 are disposed opposite to each other, to form a plurality of monitoring units 200a. The plurality of monitoring units 200a may be electrically connected to the plurality of wires 105 in a one-to-one correspondence, to implement electrical connection to the control apparatus 180. Specifically, the electrode region 201b of the first electrode layer 201 is electrically connected to the wire 105 (for example, the wire harness), to implement electrical connection to the control apparatus 180 through the wire 105. The electrode region 201b of the second electrode layer 203 is also electrically connected to the wire 105, to implement electrical connection to the control apparatus 180 through the wire 105.

In some examples, as shown in FIG. 11, the electrode region 201b of the first electrode layer 201 includes textile conductive fibers. For example, the electrode region 201b is obtained by plaiting or weaving (for example, knitting or weaving) conductive fibers. The wire 105 is a metal wire, a connector 108 is disposed on the first electrode layer 201, and the electrode region 201b is electrically connected to the wire 105 via the connector 108.

The electrode region 201b in embodiments of this application may be formed by knitting conductive fibers. In other words, the first electrode layer 201 may be manufactured by using a textile (for example, knitting or weaving) process. However, the conductive fibers cannot be welded to the control apparatus 180. Therefore, the connector 108 is disposed on the first electrode layer 201 in embodiments of this application, one end of the connector 108 is electrically connected to the electrode region 201b, and the other end is electrically connected (for example, welded) to one end of the metal wire 105, to electrically connect the other end of the wire 105 to the control apparatus 180 through welding. Based on the foregoing setting, the sensor 104 can be reliably connected to the control apparatus 180.

In some examples, the connector 108 is disposed on the first electrode layer 201, and specifically, the connector 108 may be directly disposed on the electrode region 201b, to facilitate electrical connection between the electrode region 201b and the connector 108.

In some examples, as shown in FIG. 11, the electrode region 201b is electrically connected to the connector 108 through the conductive fibers (gray lines in FIG. 11). Based on the foregoing setting, the connector 108 can be more flexibly mounted, so that electrical connection between the electrode region 201b and the connector 108 is easy to implement, and the connection can be more reliable.

In some examples, as shown in FIG. 11, a plurality of electrode regions 201b are connected to a same side of the first electrode layer 201 through the conductive fibers, and are all electrically connected to one end of the connector 108. The other end of the connector 108 is correspondingly electrically connected to the plurality of wires 105, to implement reliable connection between the plurality of electrode regions 201b and the control apparatus 180. Based on the foregoing setting, it is further convenient to sort and lead out the wires 105. After being bundled (that is, combined into the wire harness) at the connector 108, the plurality of wires 105 may be directly led out through the through hole 106.

In some examples, the connector 108 may be a metal conductive button, and a diameter of the metal conductive button may be less than 5 mm, for example, may be 2 mm, 3 mm, or 4 mm, to reduce impact on ride comfort. In this case, the metal conductive button is snap-fitted into an opening formed by the conductive fibers, so that the connector 108 can be electrically connected to the electrode region 201b. The connection manner is simple, and the electrical connection is more reliable.

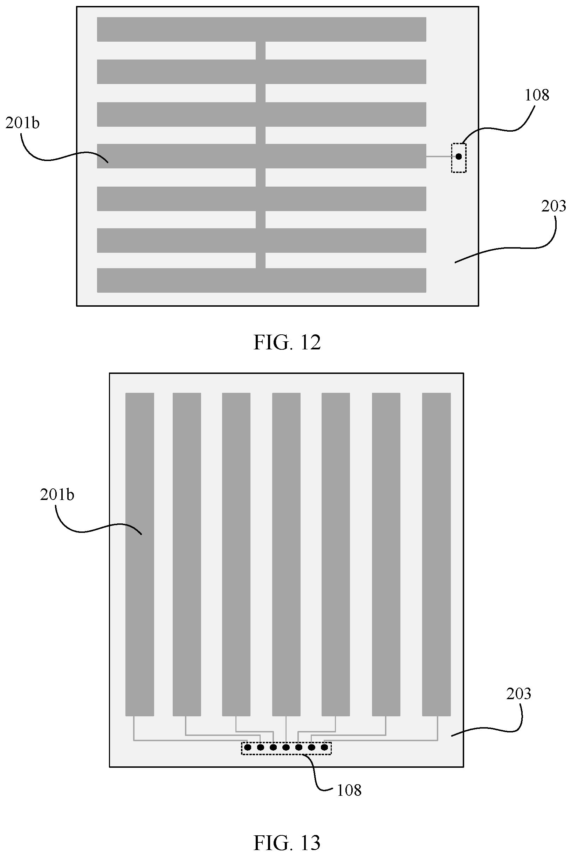

In some examples, the sensor 104 may be the pressure sensor 200 shown in FIG. 8 or FIG. 9, and the plurality of monitoring units 200a are arranged in a one-dimensional array. In this case, the plurality of electrode regions 201b of the second electrode layer 203 may be electrically connected to each other, and then are electrically connected, as one signal output, to the control apparatus 180. FIG. 12 is a diagram of a circuit connection structure of an example of a second electrode layer 203. As shown in FIG. 12, after the plurality of electrode regions 201b are electrically connected to each other, the plurality of electrode regions 201b are electrically connected to one end of the connector 108 at the second electrode layer 203 through the conductive fibers, and the other end of the connector 108 is electrically connected to the control apparatus 180 through the wire 105.

In some examples, the sensor 104 may be the pressure sensor 200 shown in FIG. 7, and the plurality of monitoring units 200a are arranged in a two-dimensional array. In this case, the plurality of electrode regions 201b of the second electrode layer 203 may be insulated from each other, and then are electrically connected, as a plurality of signal outputs, to the control apparatus 180. In other words, a circuit connection structure of the second electrode layer 203 is the same as a circuit connection structure of the first electrode layer 201 shown in FIG. 11. FIG. 13 is a diagram of a circuit connection structure of another example of a second electrode layer 203. As shown in FIG. 13, the plurality of electrode regions 201b are electrically connected to one end of the connector 108 at the second electrode layer 203 through the plurality of conductive fibers in a one-to-one correspondence, and the other end of the connector 108 is electrically connected to the control apparatus 180 through the plurality of wires 105.

In some examples, with reference to FIG. 1 to FIG. 4 and FIG. 8, the sensor 104 includes the cushion pressure sensor 210 located on the cushion 110, the backrest pressure sensor 220 located on the backrest 120, the headrest pressure sensor 230 located on the headrest 130, and the leg rest pressure sensor 240 located on the leg rest 140. In some embodiments of this application, the plurality of pressure sensors are disposed at different positions of the seat, to implement more intelligent and efficient adaptive adjustment of the seat.

In some examples, with reference to FIG. 1 to FIG. 4 and FIG. 8, the cushion pressure sensor 210, the backrest pressure sensor 220, the headrest pressure sensor 230, and the leg rest pressure sensor 240 each include a plurality of monitoring units 200a arranged in an array, and disposing density of the monitoring units 200a of the headrest pressure sensor 230 is greater than disposing density of the monitoring units 200a of the cushion pressure sensor 210, the backrest pressure sensor 220, and the leg rest pressure sensor 240.

In other words, compared with other regions, the headrest 130 has a maximum quantity of monitoring units 200a disposed per unit area, to meet a high-precision pressure monitoring requirement for the head of the passenger. In addition, density of monitoring units 200a disposed in the other regions may be small, to reduce material costs of the sensor. In some embodiments of this application, the disposing density of the monitoring units 200a is configured, to reduce material costs of the sensor while meeting the monitoring requirement.

The foregoing descriptions are merely specific implementations of this application, but the protection scope of this application is not limited thereto. Any variation or replacement that can be readily figured out by a person skilled in the art within the technical scope disclosed in this application shall fall within the protection scope of this application. Therefore, the protection scope of this application shall be subject to the protection scope of the claims.

## Claims

1. A seat, comprising:
a seat frame (101);
a comfort layer (102), disposed outside the seat frame (101), wherein the comfort layer (102) is provided with a through hole (106);
a trim layer (103), disposed outside the comfort layer (102); and
a sensor (104), located between the comfort layer (102) and the trim layer (103), wherein the sensor (104) is electrically connected to a control apparatus (180) through a wire (105) that passes through the through hole (106).

2. The seat according to claim 1, wherein a distance between the through hole (106) and an edge of the comfort layer (102) ranges from 10 millimeters to 20 millimeters.

3. The seat according to claim 1 or 2, wherein the sensor (104) is of a sheet structure and disposed on the comfort layer (102), and projection of the sensor (104) on the comfort layer (102) is located on an inner side of the edge of the comfort layer (102).

4. The seat according to claim 3, wherein a distance between an edge of the sensor (104) and an edge of one corresponding side of the comfort layer (102) ranges from 10 millimeters to 20 millimeters.

5. The seat according to claim 3, wherein the sensor (104) covers the through hole (106).

6. The seat according to any one of claims 1 to 5, wherein at least one edge of the comfort layer (102) is provided with a listing trench (107).

7. The seat according to any one of claims 1 to 6, wherein the sensor (104) comprises a capacitive pressure sensing pad, the capacitive pressure sensing pad comprises a first electrode layer (201), a dielectric layer (202), and a second electrode layer (203) that are stacked, the first electrode layer (201) comprises a non-electrode region (201a) and an electrode region (201b), and the electrode region (201b) is electrically connected to the wire (105).

8. The seat according to claim 7, wherein the electrode region (201b) at the first electrode layer (201) comprises textile conductive fibers, the wire (105) is a metal wire, a connector (108) is disposed on the first electrode layer (201), and the electrode region (201b) is electrically connected to the wire (105) via the connector (108).

9. The seat according to any one of claims 1 to 8, wherein the sensor (104) comprises at least one of a pressure sensor, a temperature sensor, a heart rate sensor, a blood pressure sensor, a humidity sensor, a distance sensor, a displacement sensor, or an acceleration sensor.

10. The seat according to any one of claims 1 to 9, wherein the sensor (104) comprises a cushion pressure sensor (210) located on a cushion (110), a backrest pressure sensor (220) located on a backrest (120), a headrest pressure sensor (230) located on a headrest (130), and a leg rest pressure sensor (240) located on a leg rest (140).

11. The seat according to claim 10, wherein the cushion pressure sensor (210), the backrest pressure sensor (220), the headrest pressure sensor (230), and the leg rest pressure sensor (240) each comprise a plurality of monitoring units (200a) arranged in an array, and disposing density of the monitoring units (200a) of the headrest pressure sensor (230) is greater than disposing density of the monitoring units (200a) of the cushion pressure sensor (210), the backrest pressure sensor (220), and the leg rest pressure sensor (240).

12. A vehicle, comprising one or more seats according to any one of claims 1 to 11.
